# EUROPÄISCHE PATENTANMELDUNG

(11) **EP 1 168 789 A2**
(43) Veröffentlichungstag der Anmeldung: **02.01.2002**
(21) Anmeldenummer: 01114902.8
(22) Anmeldetag: 19.06.2001
(51) Int. Cl.: H04M 3/42, H04Q 3/58

(54) **Direkte Verbindung der Koppelfelder eines CTI-Servers mit einer Telekommunikationsanlage**

(30) Priorität: 20.06.2000 DE 10030122
(71) Anmelder: SIEMENS AKTIENGESELLSCHAFT, 80333 München (DE)
(72) Erfinder: Janson, Manfred, 33165 Lichtenau (DE)

(57) **Zusammenfassung**

Die vorliegende Erfindung betrifft eine Koppelvorrichtung (10) zum Verbinden einer Telekommunikationsanlage (11) mit einer Datenverarbeitungseinrichtung (12) zum Bereitstellen Telekommunikationsanwendungen, wobei die Telekommunikationsanlage (11) und die Datenverarbeitungseinrichtung (12) jeweils ein Koppelfeld (13, 14) zum Durchschalten der jeweiligen Telekommunikationsanwendung aufweisen und die Koppelvorrichtung (10) eine direkte Verbindung zwischen den jeweiligen Koppelfeldern (13, 14) herstellt.

## Beschreibung

Die vorliegende Erfindung betrifft eine Koppelvorrichtung zum Verbinden einer Telekommunikationsanlage mit einer Datenverarbeitungseinrichtung durch welche Telekommunikationsanwendungen für die Telekommunikationsanlage bereitgestellt werden.

Ergänzende Dienste, wie z.B. Call-Center-Anwendungen, Spracherkennung und Text-to-Speech-Conversion, die vorwiegend in privaten Telekommunikationsnetzen bereitgestellt werden, können mittels der sogenannten Computer Telephony Integration (CTI) realisiert werden. Diese Dienste - nachfolgend als Telekommunikationsanwendungen bezeichnet - werden in der Regel durch in den privaten Telekommunikationsnetzen vorgesehene zentrale CTI-Server (z. B. ein Media-Framework) realisiert und werden einer Telekommunikationsanlage bzw. deren Anwendern zur Verfügung gestellt. Durch einen derartigen CTI-Server werden beispielsweise gemäß den S- und H-Empfehlungen des Enterprise Computer Telephony Forums (ECTF) Telekommunikationsanwendungen bereitgestellt.

Um die Telekommunikationsanwendungen eines CTI-Servers für die Telekommunikationsanlage verfügbar zu machen, ist eine - z.B. auf einer analogen, einer ISDN-orientierten oder einer paketorientierten Datenübermittlung basierende - Verbindung zwischen dem CTI-Server und der Telekommunikationsanlage erforderlich. Steuersignale und Zustandsanzeigen (Monitoring) zwischen der Telekommunikationsanlage und dem Server können dabei nach Bedarf über eine separate Verbindung gemäß dem CSTA-Protokoll (Computer Supported Telecommunications Application) abgewickelt werden.

Ein Anschluß eines CTI-Servers an die Telekommunikationsanlage erfolgt über spezielle Anschlußbaugruppen - in der Literatur häufig als Line-Cards bezeichnet. Ein Anschluß eines CTI-Servers an die Telekommunikationsanlage kann dabei beispielsweise über analoge a/b- oder digitale S₀- bzw. S_{2M}-Schnittstellen bereitstellende Anschlußbaugruppen erfolgen. Mit Hilfe jeweils einer Anschlußbaugruppe in der Telekommunikationsanlage und dem CTI-Server werden jeweils TDM-orientierte (Time Division Multiplex) Koppelfelder der Telekommunikationsanlage und des CTI-Servers miteinander verbunden. Auf diese Weise können ein oder mehrere Nutzdatenkanäle - beispielsweise ISDN-orientierte B-Kanäle - der Telekommunikationsanlage mit den Betriebsmitteln des CTI-Servers verbunden werden.

Der Nachteil dieser Anordnung besteht darin, daß eine aufwendige Leitungssignalisierung zum Anschalten, d. h. für den Verbindungsaufbau bzw. -abbau zwischen dem CTI-Server und der Telekommunikationsanlage erforderlich ist. Diese Leitungs-signalisierung belegt Ressourcen, wie z. B. Prozessorleistung und Speicherkapazitäten, sowohl in der Telekommunikationsanlage als auch im CTI-Server. Dadurch ergeben sich unter Last zum Teil große Durchschaltezeiten insbesondere bei mittleren und großen Systemen.

Die Aufgabe der vorliegenden Erfindung besteht darin, eine Koppelvorrichtung zum Verbinden einer Telekommunikationsanlage mit einer Datenverarbeitungseinrichtung zur Verfügung zu stellen, wobei eine einfache Verbindung zwischen der Telekommunikationsanlage und dem Server zum Bereitstellen von Telekommunikationsanwendungen ermöglicht wird.

Die Lösung dieser Aufgabe erfolgt erfindungsgemäß mit den Merkmalen des Patentanspruchs 1.

Gemäß der vorliegenden Erfindung wird mit Hilfe der Koppelvorrichtung ein Koppelfeld der Telekommunikationsanlage mit einem Koppelfeld der Datenverarbeitungseinrichtung - insbesondere eines gemäß der bekannten S.100- und H.100-Vorschrift basierenden CTI-Servers - bzw. bestimmte Koppelpunkte der jeweiligen Koppelfelder direkt miteinander verbunden. Die Telekommunikationsanlage weist dazu erfindungsgemäß eine erste Schnittstelle zum direkten Verbinden des Koppelfeldes der Telekommunikationsanlage mit der erfindungsgemäßen Koppelvorrichtung auf. Die erste Schnittstelle, die einen oder mehrere direkte Koppelpunkte des Koppelfeldes darstellt, wird dabei über einen in der Telekommunikationsanlage eingerichteten, der Koppelvorrichtung zugeordneten virtuellen Teilnehmer angesteuert.

Der Vorteil der erfindungsgemäßen, direkten Verbindung der beiden Koppelfelder miteinander besteht darin, daß der Hardware-Aufwand gegenüber dem Stand der Technik wesentlich geringer ist. Durch den Wegfall der beim Stand der Technik notwendigen Anschlußbaugruppen sowohl in der Telekommunikationsanlage als auch in der Datenverarbeitungseinrichtung ergibt sich eine Kosteneinsparung gegenüber dem Stand der Technik.

Weiterhin erfolgt eine schnelle Durchschaltung zwischen dem Koppelfeld der Telekommunikationsanlage mit dem Koppelfeld der Datenverarbeitungseinrichtung, z. B. über den Koppelfeldbaustein SWTI der Firma Siemens AG, da die aufwendige Leitungssignalisierung, z. B. im Rahmen eines Verbindungsaufbaus bzw. -abbaus entfallen kann.

Vorteilhafte Ausgestaltungen der vorliegenden Erfindung sind in den jeweiligen Unteransprüchen wiedergegeben.

Vorteilhafterweise werden ein oder mehrere Koppelpunkte der jeweiligen Koppelfelder durch die erfindungsgemäße Koppelvorrichtung miteinander verbunden. Bei TDM-Koppelfeldern (Time Division Multiplex) werden bestimmte Zeitschlitze des Koppelfeldes der Telekommunikationsanlage mit bestimmten Zeitschlitzen des Koppelfeldes der Datenverarbeitungseinrichtung durch die Koppelvorrichtung direkt miteinander verbunden. Die Koppelvorrichtung führt dabei bei der Datenübertragung eine bidirektionale Konvertierung zwischen den durch die beiden Systeme unterstützten Datenformate durch, d.h. die Koppelvorrichtung führt eine Schnittstellenwandlung zwischen dem Koppelfeld der Telekommunikationsanlage und dem Koppelfeld der Datenverarbeitungseinrichtung bzw. der jeweiligen Koppelpunkte durch.

Zum Ansteuern der bestimmten Zeitschlitze bzw. Koppelpunkte der Telekommunikationsanlage ist es erforderlich, den Koppelpunkt bzw. die Koppelpunkte als einen virtuellen - vorzugsweise ausschließlich in Software implementierten - Teilnehmer der Telekommunikationsanlage zu definieren. Somit kann dieser Koppelpunkt bzw. diese Koppelpunkte wie eine herkömmliche Nebenstelle der Telekommunikationsanlage angesprochen werden.

Die erfindungsgemäße Koppelvorrichtung wird vorteilhafterweise für eine Realisierung von Sprachanwendungen durch die Datenverarbeitungseinrichtung, wie z. B. Spracherkennung und Text-to-Speech-Anwendungen verwendet.

Die Steuerung und das Monitoring der in der Telekommunikationsanlage verwendeten Koppelpunkte erfolgt über eine zweite Schnittstelle, vorteilhafterweise über das standardisierte CSTA-Protokoll (Computer Supported Telecommunication Application).

Die vorliegende Erfindung wird nachfolgend anhand bevorzugter Ausführungsbeispiele unter Bezug auf die beigefügten Zeichnungen näher erläutert.

### Dabei zeigen:

- Fig. 1:: ein Strukturbild zur schematischen Darstellung einer Anordnung gemäß dem Stand der Technik;
- Fig. 2:: ein Strukturbild zur schematischen Darstellung einer erfindungsgemäßen Verbindung einer Telekommunikationsanlage und einer Datenverarbeitungseinrichtung; und
- Fig. 3:: ein Ausführungsbeispiel der vorliegenden Erfindung.

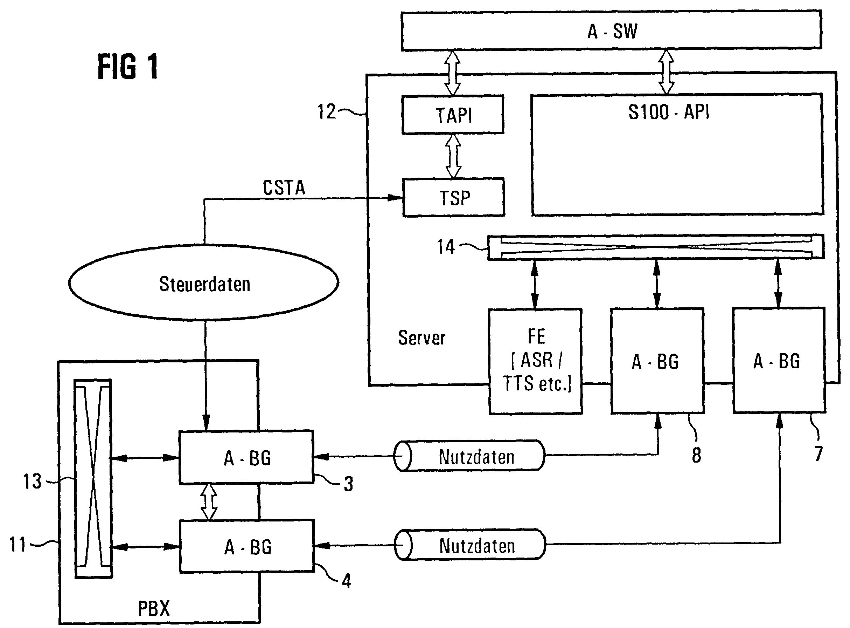

Fig. 1 zeigt ein Strukturbild zur schematischen Darstellung einer CTI-Anordnung nach dem Stand der Technik. Die Anordnung umfaßt eine Telekommunikationsanlage 11 und einen CTI-Server 12 - insbesondere einen gemäß der bekannten S.100- und H.100 Vorschriften ausgestalteten Media-Framework - zum Bereitstellen von Telekommunikationsanwendungen für die Telekommunikationsanlage 11 bzw. der Telekommunikationsanlage 11 zugeordnete - nicht dargestellte - Teilnehmer.

Die Telekommunikationsanlage 11 stellt über ein Koppelfeld 13 eine Verbindung zum externen CTI-Server 12 her. Die Schnittstellen zur Datenübertragung werden jeweils durch Anschlußbaugruppen 3 und 4 der Telekommunikationsanlage 11 bzw. durch Anschlußbaugruppen 7 und 8 des CTI-Servers 12 gebildet. Die Datenübertragung kann dabei beispielsweise gemäß einem zeitschlitz-orientierten kontinuierlichen Übertragungsverfahren und/oder gemäß einem paketorientierten Übertragungsverfahren erfolgen.

Im CTI-Server 12 erfolgt über das - vorzugsweise gemäß der H.100-Vorschrift ausgestaltete - Koppelfeld 14 eine Verbindung mit, die jeweiligen Telekommunikationsanwendungen - z.B. Spracherkennung (ASR, Automatic Speech Recognition) oder Text-to-Speach (TTS) - realisierenden Funktionseinheiten FE - in der Literatur häufig als 'Ressource Boards' bezeichnet. Diese Funktionseinheiten FE greifen über eine Schnittstelle S.100-API (Application Programming Interface) auf eine die jeweiligen Telekommunikationsanwendungen steuernde Anwendungssoftware A-SW zu. Die Anwendungssoftware A-SW ist wiederum über geeignete Schnittstellen TAPI (Telephony Application Programming Interface) und TSP (Telephony Service Provider) mit der Telekommunikationsanlage 11 verbunden, wobei über diese Schnittstellen gemäß dem CSTA-Protokoll (Computer Supported Telecommunications Application) Informationen zur Steuerung und zum Monitoring zwischen der Telekommunikationsanlage 11 und dem CTI-Server 12 übertragen werden.

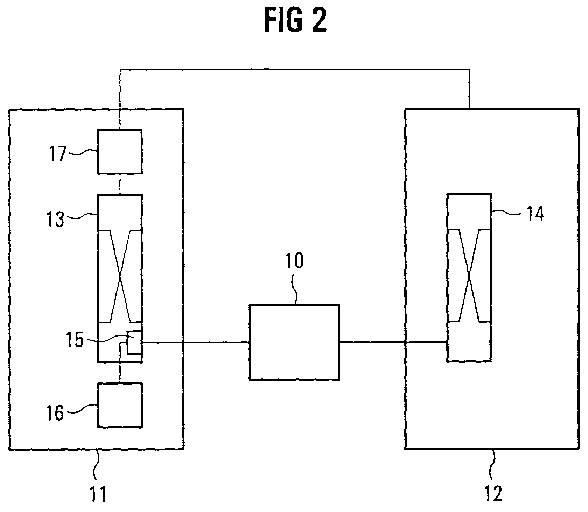

Fig. 2 zeigt ein Strukturbild zur schematischen Darstellung einer erfindungsgemäßen Verbindung der Telekommunikationsanlage 11 und des CTI-Servers 12.

Die erfindungsgemäße Koppelvorrichtung 10 verbindet die jeweiligen Koppelfelder 13 und 14 bzw. bestimmte Koppelpunkte der Koppelfelder 13 und 14 der Telekommunikationsanlage 11 und des CTI-Servers 12 miteinander. Diese Koppelpunkte entsprechen z.B. in einem TDM-orientierten Koppelfeld einem oder mehreren Zeitschlitzen, die jeweils über die Koppelvorrichtung 10 direkt miteinander verbunden werden.

Zum Anschluß der erfindungsgemäßen Koppelvorrichtung 10 an die Telekommunikationsanlage 11 weist die Telekommunikationsanlage 11 eine erste Schnittstelle 15 auf, die einen oder mehrere Koppelpunkte des Koppelfeldes 13 direkt zur Verfügung stellt. Um diese Koppelpunkte durch die Telekommunikationsanlage 11 bzw. durch eine - nicht dargestellte - Steuereinheit der Telekommunikationsanlage 11 ansprechen zu können, ist in der Telekommunikationsanlage 11 über eine bevorzugt in Software implementierte Teilnehmereinrichtung 16 ein virtueller Teilnehmer realisiert. Die Schnittstelle 15 wird über den virtuellen Teilnehmer beispielsweise über Nebenstellen der Telekommunikationsanlage 11 oder über den CTI-Server 12 mittels CSTA-Protokoll über eine zweite Schnittstelle 17 der Kommunikationsanlage 11 angesprochen.

Die erfindungsgemäße Koppelvorrichtung 10 ist vorteilhafterweise eine eigenständige Vorrichtung, die extern zwischen der Telekommunikationsanlage 11 und dem CTI-Server 12 angeschlossen wird oder ist alternativ als interne Schnittstelle im CTI-Server 12 implementiert.

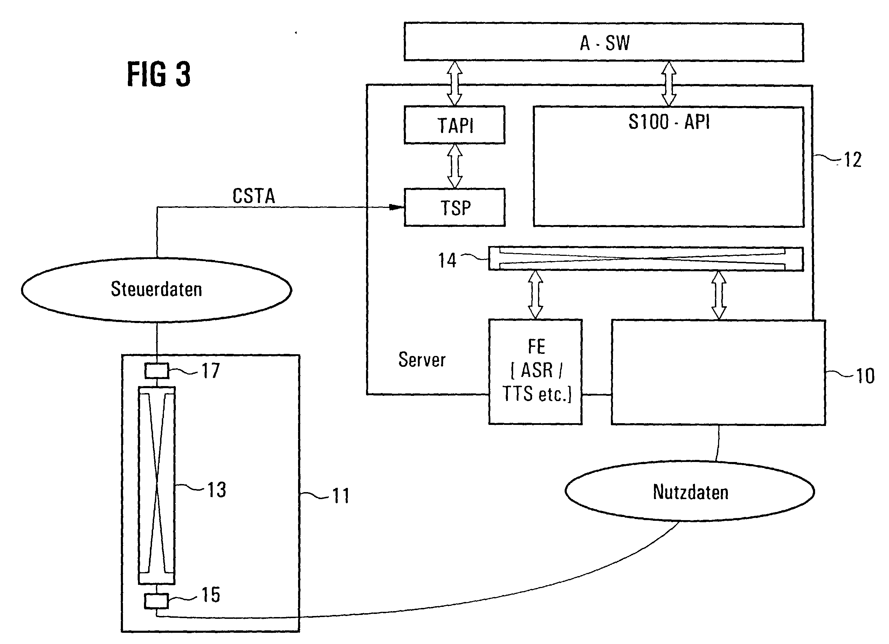

Fig. 3 zeigt ein Ausführungsbeispiel der vorliegenden Erfindung. Wie in der Figur gezeigt wird, entfallen gegenüber dem Stand der Technik (Fig. 1) die Anschlußbaugruppen zur Verbindung der Telekommunikationsanlage 11 mit dem CTI-Server 12. Die weiteren in Fig. 3 gezeigten Komponenten wurden bereits unter Bezugnahme auf die Figuren 1 und 2 erläutert.

Mit Hilfe der erfindungsgemäßen Koppelvorrichtung 10, die z.B. mit dem Koppelfeldbaustein TEB SWTI der Firma Siemens AG realisiert werden kann, wird der externe CTI-Server 12 wie eine Erweiterungsbox über ein Standardverbindungskabel an bestehende Telekommunikationsanlagen 11 angeschlossen.

Die erfindungsgemäße Koppelvorrichtung 10 wird dabei als eine Hardware-Basiskomponente beispielsweise für einen S.100-Media-Server als Ressource für einen Rufkanal in eine geeignete S.100-Umgebung (z. B. Dialogic/Microsoft-S.100 API) eingebunden.

## Patentansprüche

1. Koppelvorrichtung (10) zum Verbinden einer Telekommunikationsanlage (11) mit einer Telekommunikationsanwendungen bereitstellenden Datenverarbeitungseinrichtung (12),
wobei die Telekommunikationsanlage (11) und die Datenverarbeitungseinrichtung (12) jeweils ein Koppelfeld (13, 14) zum Durchschalten der jeweiligen Telekommunikationsanwendung zu einem an die Telekommunikationsanlage (11) angeschlossenen Nutzer aufweisen, und
wobei die Koppelvorrichtung (10) direkt an die jeweiligen Koppelfeldern (13, 14) angeschlossen ist.

2. Koppelvorrichtung (10) gemäß Anspruch 1,
**dadurch gekennzeichnet,**
**daß** die Koppelvorrichtung (10) eine bidirektionale Konvertierung zwischen dem durch das Koppelfeld (13) der Telekommunikationsanlage (11) unterstützten Datenformat und dem durch das Koppelfeld (14) der Datenverarbeitungseinrichtung (12) unterstützten Datenformat durchführt.

3. Koppelvorrichtung (10) gemäß Anspruch 1 oder 2,
**dadurch gekennzeichnet,**
**daß** die Koppelvorrichtung (10) jeweils mindestens einen Zeitschlitz der jeweiligen Koppelfelder (13, 14) miteinander verbindet.

4. Koppelvorrichtung (10) gemäß Anspruch 1, 2 oder 3,
**dadurch gekennzeichnet,**
**daß** die Koppelvorrichtung (10) Sprachdaten-Anwendungen zwischen der Telekommunikationsanlage (11) und der Datenverarbeitungseinrichtung (12) realisiert.

5. Koppelvorrichtung (10) nach einem der vorhergehenden Ansprüche,
**dadurch gekennzeichnet,**
**daß** eine Ansteuerung der Koppelvorrichtung (10) durch die Telekommunikationsanlage (11) über einen in der Telekommunikationsanlage (11) eingerichteten, der Koppelvorrichtung (10) zugeordneten virtuellen Teilnehmer erfolgt.

6. Koppelvorrichtung (10) nach einem der vorhergehenden Ansprüche,
**dadurch gekennzeichnet,**
**daß** eine Übertragung von Steuerungs- und Überwachungsinformationen zwischen der Telekommunikationsanlage (11) und der Datenverarbeitungseinrichtung (12) über eine separate Verbindung gemäß dem CSTA-Protokoll erfolgt.

7. Koppelvorrichtung (10) nach einem der vorhergehenden Ansprüche,
**dadurch gekennzeichnet,**
**daß** die Koppelvorrichtung (10) als separate Einrichtung ausgestaltet ist.

8. Koppelvorrichtung (10) nach einem Ansprüche 1 bis 6,
**dadurch gekennzeichnet,**
**daß** die Koppelvorrichtung (10) als Schnittstelleneinheit in der Datenverarbeitungseinrichtung (12) implementiert ist.
